# EUROPÄISCHE PATENTANMELDUNG

(11) **EP 1 947 165 A1**
(43) Veröffentlichungstag der Anmeldung: **23.07.2008**
(21) Anmeldenummer: 07023627.8
(22) Anmeldetag: 06.12.2007
(51) Int. Cl.: C10M 175/00, B01D 17/02, C10N 40/16

(54) **Verfahren zum Aufbereiten von Altölen und/oder Öl/Wassergemischen oder ähnlichen flüssigen Gemischen**

(30) Priorität: 08.12.2006 DE 102006057910
(71) Anmelder: EXAD GmbH, 45881 Gelsenkirchen (DE)
(72) Erfinder: Ellmann, Alois, Dr., 25923 Uphusum (DE); Hammer, Ernst Ekkehard, Dr., 45481 Mülheim a.d. Ruhr (DE)
(74) Vertreter: Vomberg, Friedhelm

(57) **Zusammenfassung**

Die Erfindung betrifft ein Verfahren zum Aufbereiten von Altölen und/oder Öl/Wassergemischen und/oder Lösemittel/Wassergemischen oder ähnlichen flüssigen Gemischen. Erfindungsgemäß werden die Altöle oder flüssigen Gemische einem zweistufigem Prozess unterworfen, bei dem zunächst mittels Extraktion Verunreinigungen weitestgehend entfernt werden und die verbleibenden Verunreinigungen anschließend mittels Adsorption entfernt werden, wobei das Adsorptionsmittel regenerierbar ist.

## Beschreibung

Die Erfindung betrifft ein Verfahren zum Aufbereiten von Altölen und/oder ÖI/Wassergemischen oder ähnlichen flüssigen Gemischen.

Zur Reinigung von Paraffinöl wurden ursprünglich Bindemittel für die Verunreinigungen verwendet, wonach das Gemisch extrahiert worden ist. Nachteiliger Weise fallen die Bindemittel mit den ursprünglichen Verschmutzungen des Altöls als Sondermüll an, der einer aufwendigen Entsorgung bedarf.

In der DE 42 35 213 C2 ist daher vorgeschlagen worden, dass durch Einsatz geeigneter Extraktionsmittel die Möglichkeit besteht, die Verunreinigungen, die sich in verschmutztem, insbesondere gebrauchtem Paraffinöl befinden, durch geeignete Extraktionsmittel agglomerieren lassen, wobei die benutzten Extraktionsmittel nach erfolgtem Austrag der agglomerierten Verschmutzungen durch nachfolgende Destillation wieder zurück gewonnen und in den Prozesskreislauf wieder eingeführt werden können. Zur Agglomeration der Verunreinigungen wird vorgeschlagen ein Gemisch aus einem polaren und einem unpolaren Lösemittel zu verwenden, also beispielsweise eine Mischung aus 50% Isopropanol und 50% Aceton.

In einem anderen Aufbereitungsverfahren wird das Altöl in Wasserstoffatmosphäre auf ca. 400°C aufgeheizt, wobei die rückgewinnbaren Ölfraktionen verdampft werden, so dass die Schwerölfraktion abgestoßen werden kann. Nach ein- oder zweistufiger Wasserstoffbehandlung mit einem Katalysator lässt sich in einer abschließenden destillativen Trennung das Grundöl aus dem Grundöl-Gasölgemisch in einer Destillationskolonne abscheiden.

Alternativ ist es ebenso nach dem Stand der Technik bekannt, nach der Trocknung des Altöls und dem Abscheiden von Leichtsiedern das Altöl einer Flashdestillation bei ca. 400°C zu unterziehen, bevor Grundöl und Gasöl in einer Destillationskolonne getrennt und die Destillate extraktiv nachbehandelt werden.

Nachteiliger Weise müssen nach dem Stand der Technik eine Vielzahl von Verfahrensschritten vorgenommen, große Energiemengen aufgewendet und das Cracken von Ölmolekülen infolge hoher Prozesstemperaturen in Kauf genommen werden.

Es ist Aufgabe der vorliegenden Erfindung ein neues Verfahren anzugeben, das leicht handhabbar und preiswert durchführbar ist.

Diese Aufgabe wird durch ein Verfahren nach Anspruch 1 gelöst, das erfindungsgemäß dadurch gekennzeichnet ist, dass die Altöle oder Öl/Wassergemische oder ähnliche flüssige Gemische einem zweistufigen Prozess unterworfen werden, bei dem zunächst mittels Extraktion Verunreinigungen weitestgehend entfernt werden und die verbleibenden Verunreinigungen anschließend mittels Adsorption entfernt werden, wobei das Adsorptionsmittel regenerierbar ist.

Im Unterschied zu den nach dem Stand der Technik bekannten Verfahren läuft das erfindungsgemäße Verfahren zweistufig ab. Darüber hinaus liegen die beim erfindungsgemäßen Verfahren verwendeten Temperaturen maximal bei 200°C, wodurch das beispielsweise mit der Destillation verbundene Cracken einzelner Ölmoleküle, das bei Destillationstemperaturen von ca. 400°C nicht vermeidbar ist, sicher unterbunden wird. Besonders vorteilhaft ist es jedoch, dass die beladenen Adsorptionsmittel regenerierbar sind, wodurch sich der Verbrauch an Adsorptionsmitteln erheblich einschränken und das Verfahren damit preiswerter durchführen lässt. Vorzugsweise wird der erste Verfahrensschritt, d. h. die Extraktion bei Temperaturen zwischen 25°C und 90°C durchgeführt.

Weiterbildungen der vorliegenden Erfindung sind in den Unteransprüchen beschrieben.

So kann im Bedarfsfall die zweite Stufe ein- oder mehrfach durchlaufen werden, wobei im Regelfall eine ein- bis zweifache adsorptive Abtrennung der verbliebenen Verunreinigungen ausreichend ist.

Vorzugsweise werden in der ersten Stufe Kohlenwasserstoffe als unpolare oder Kohlendioxid als polares Extraktionsmittel eingesetzt.

In der zweiten Stufe werden vorzugsweise polare Adsorptionsmittel verwendet.

Nach einer Weiterbildung der Erfindung soll das Adsorptionsmittel thermisch regeneriert werden.

Nach einer bevorzugten Ausführungsform der Erfindung ist vorgesehen, dass in der zweiten Stufe, d. h. nach der Extraktion, das Adsorptionsmittel in mindestens zwei Reaktionsbehältern verteilt ist und dass in alternierender Folge mindestens ein Reaktionsbehälter zur Entfernung der Verunreinigungen beladen und in mindestens einem anderen Reaktionsbehälter das dortige Adsorptionsmittel regeneriert wird. Auf diese Weise kann das Verfahren quasi-kontinuierlich angewendet werden.

Als Extraktionsmittel haben sich in der ersten Stufe Propan oder Butan oder n-Petan oder weitere Kohlenwasserstoffe im Bereich von C₂ bis C₁₀ oder Mischungen aus diesen bewährt.

In einer alternativen Ausführungsform der Erfindung ist es möglich, dass in der zweiten Stufe regenerierbare ionische Flüssigkeiten zur Entfernung der verbliebenen Verunreinigungen eingesetzt werden. Vorzugsweise werden diese ionischen Flüssigkeiten mittels einer weiteren Extraktion regeneriert.

Die Trennung des Extraktionsmittels vom aufzubereitenden Stoff nach der Extraktion kann entweder mittels Ultraschallschwingungen oder durch Temperaturerhöhung und Druckabsenkung vorgenommen werden.

Das zweistufige Verfahren, bei dem in der ersten Stufe Verunreinigungen extrahiert und in der zweiten Stufe die restlichen Verunreinigungen durch Festbettadsorber oder ionische Flüssigkeiten entfernt werden, eignet sich insbesondere auch zur Aufbereitung von Lösemittel/Wassergemischen, alkoholischen Lösemitteln und Lösemittel/Farbschlammgemischen. Bei der Extraktion von alkoholischen Lösemitteln aus wässrigen Gemischen werden vorzugsweise entaromatisierte Kohlenwasserstoffe eingesetzt. Schon die extraktive Trennung der Lösemittel/Wassergemische ohne nachfolgenden Adsorptionsschritt ist gegenüber der klassischen destillativen Trennung von besonderem Vorteil, weil bei der Extraktion keine azeotropen Gemische auftreten, die eine destillative Trennung erheblich behindern.

Bei bestimmten Ölen kann es erforderlich sein, metallorganische Verbindungen mittels bekannter Entmetallisierungsverfahren vor Eintritt in die Adsorptionsstufe zu entfernen.

Weitere Ausführungsbeispiele und Vorteile werden anhand der Zeichnungen erläutert. Es zeigen:
- Fig. 1 und 2: jeweils Flussdiagramme des zweistufigen Verfahrens zur Aufbereitung von Altöl oder Öl/Wassergemischen und
- Fig. 3.1-3.3: Flussdiagramme der Extraktion/Adsorption bei Umgebungsdruck und Umgebungstemperatur mittels Zentrifuge/Dekanter und mechanischem Brüdenverdichter.

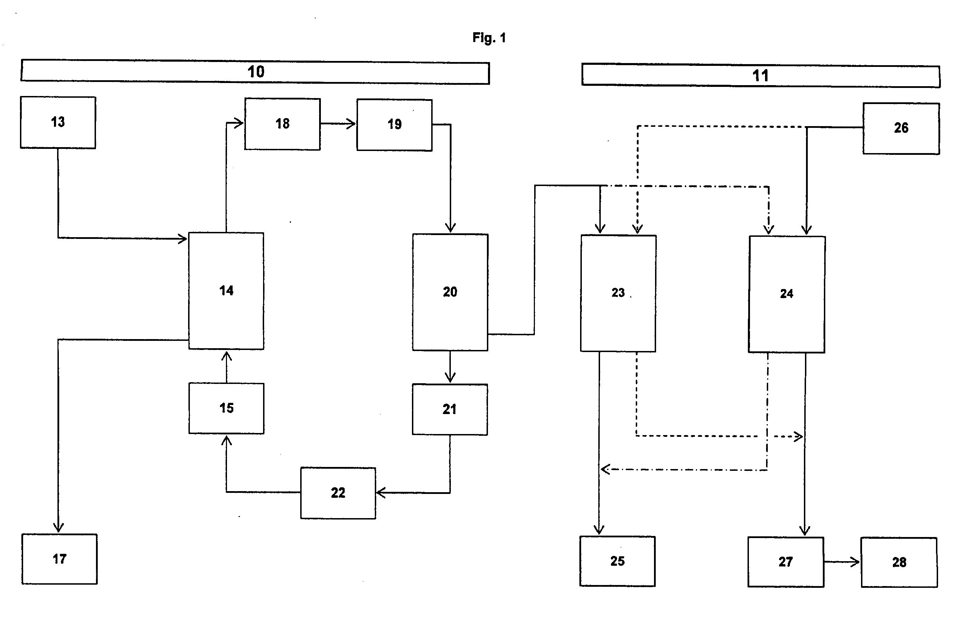

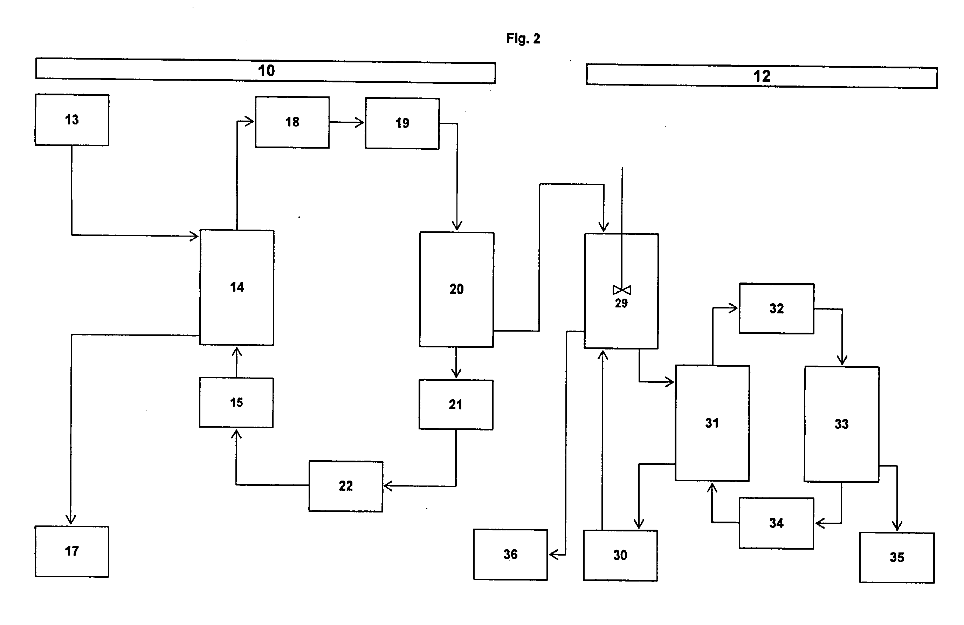

Die in den Fig. 1 und 2, in der jeweils linken Zeichnungshälfte dargestellte erste Stufe betrifft einheitlich die Extraktion 10, der nachfolgend eine Adsorption 11 mit einem Festbettadsorber (siehe Fig. 1) oder eine Adsorption 12 mit ionischen Flüssigkeiten (siehe Fig. 2) folgt. In der Extraktionsstufe wird das Altöl oder ein Öl/Wassergemisch 13 nach Vorwärmung in einen Extraktor 14 gegeben und unter Druck Propan aus einem Propanheizer 15 hinzugefügt. In dem Extraktor löst das Propan das Öl, wobei sich zwei Phasen bilden, nämlich eine leichtere Phase Propan/Öl sowie eine schwerere Phase, bestehend aus Schweröl, Feststoffen und Wasser, die sich unten absetzt. Schweröl, Feststoffe und Wasser werden in einen Behälter 17 abgeführt. Man kann die leichtere Phase anschließend in einen umschaltbaren und mit Bleicherde gefüllten Filter 18 einleiten, der z. B. in Form einer fluidisierten Wirbelschicht oder als Festbett ausgebildet sein kann. In diesem Filter werden feinste mitgerissene Teilchen abgefangen, bevor nach einer Entspannung des Öl/Propangemisches 19 in einem Abscheider 20 das Propan aus der Propan/Öl-Phase durch Druckabsenkung und Temperaturerhöhung vergast. Das gasförmige Propan kondensiert im Propankondensator 21 und steht nach Druckerhöhung 22 zur Extraktion wieder zur Verfügung. Das in dem Abscheider 20 zurückbleibende Öl wird nunmehr der Adsorptionsstufe 11 bzw. 12 zugeführt.

Bei der in Fig. 1 dargestellten Ausführungsform besitzt die zweite Stufe 11 zwei im Wechsel betriebene Rohrreaktoren 23 und 24. Im vorliegenden Fall wird in dem Rohrreaktor 23, der beispielsweise mit einem polaren Adsorptionsmittel versehen ist, die Reinigung des Öl/Wasser-Gemisches fortgesetzt, wobei sich die polaren Anteile des Öls an den Adsorber anlagern, wodurch das Öl, das als Grundöl 25 abgeschieden wird, deutlich heller wird. Ist das Adsorptionsmittel im Rohrreaktor 23 beladen, wird das Adsorptionsmittel im Rohrreaktor thermisch reaktiviert, wie dies in der Darstellung nach Fig. 1 im Rohrreaktor 24 geschieht. Zur Reaktivierung wird Verbrennungsluft 26 verwendet, wodurch Abgase entstehen, die in einem Gaswäscher 27 gereinigt werden. Der Gaswäscher 27 hält Schadstoffe zurück, so dass im Wesentlichen nur N₂, H₂O und CO₂ (siehe Bezugsziffer 28) entweichen.

Alternativ hierzu und entsprechend der Darstellung in Fig. 2 wird in der zweiten Stufe 12 die Adsorption mit ionischen Flüssigkeiten durchgeführt. Zur ersten Stufe, in der gleiche Verfahrensschritte mit gleichen Bezugszeichen wie in Fig. 1 versehen sind, wird auf die vorstehende Verfahrensbeschreibung verwiesen. Diese vom Abscheider 20 entnommenen Öle oder Lösemittel werden einem Rührwerksbehälter 29 zugeführt, dem bei Umgebungsdruck und erhöhter Temperatur eine ionische Flüssigkeit zugegeben wird. Bei intensiver Mischung im Rührwerksbehälter lagern sich die polaren Moleküle an die ionische Flüssigkeit an. Nach Abstellen des Rührwerks kommt es zur Entmischung, wobei sich die ionische Flüssigkeit einschließlich der angelagerten polaren Moleküle am Behälterboden absetzen und in einen Extraktor 31 abgezogen werden kann. Die leichtere Phase, bestehend aus gereinigtem Grundöl, kann durch Dekantieren in einen Behälter 36 abgeführt werden. Im Extraktor 31 wird die ionische Flüssigkeit mit einem Extraktionsmittel vermischt, das die polaren Moleküle von der ionischen Flüssigkeit löst. Die regenerierte ionische Flüssigkeit fließt in den Behälter 30, das aus dem Extraktor 31 abgezogene und einer Entspannung 32 zugeführte Gemisch aus Additiven und Extraktionsmittel wird einem Abscheider 33 zugeführt, in dem das Extraktionsmittel verdampft und nach Druckerhöhung 34 wieder zurückgeführt werden kann, wohingegen die Additive und Störstoffe 35 aus dem Prozess ausgeschleust und gegebenenfalls thermisch verwertet werden können.

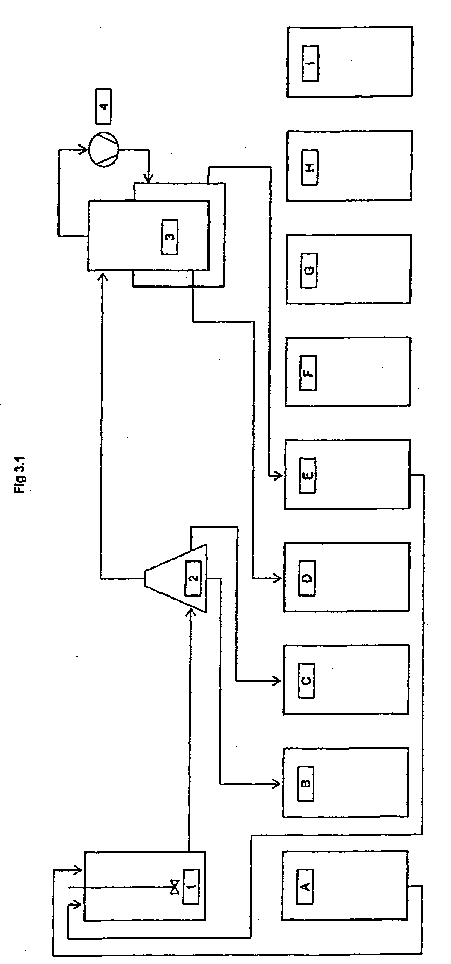

Fig. 3.1 bis 3.3 zeigen eine dreistufige Altölbehandlung.

In einem ersten Schritt gemäß Fig. 3.1 wird Altöl A zusammen mit einem Extraktionsmittel E, beispielsweise n-Pentan, in einem Rührwerksbehälter 1 bei Umgebungsdruck und Umgebungstemperatur, vorzugsweise 25°C, durchmischt. Dabei wird Vorprodukt D im Extraktionsmittel E gelöst, Schweröl B und Wasser C jedoch nicht. Der gesamte Massenstrom wird in eine Zentrifuge 2 gefördert, in der Schweröl B, Wasser C und die Mischung aus Vorprodukt D/Extraktionsmittel E voneinander getrennt werden. Schweröl B wird in Behälter B, Wasser C in Behälter C aufgefangen. Im Verdampfer 3 mit beispielsweise mech. Brüdenkompression 4 werden Vorprodukt D und Extraktionsmittel E voneinander getrennt und in den Behältern D und E aufgefangen. Statt einer mechanischen Brüdenkompression kann auch ein mehrstufiger Verdampfer zum Einsatz kommen.

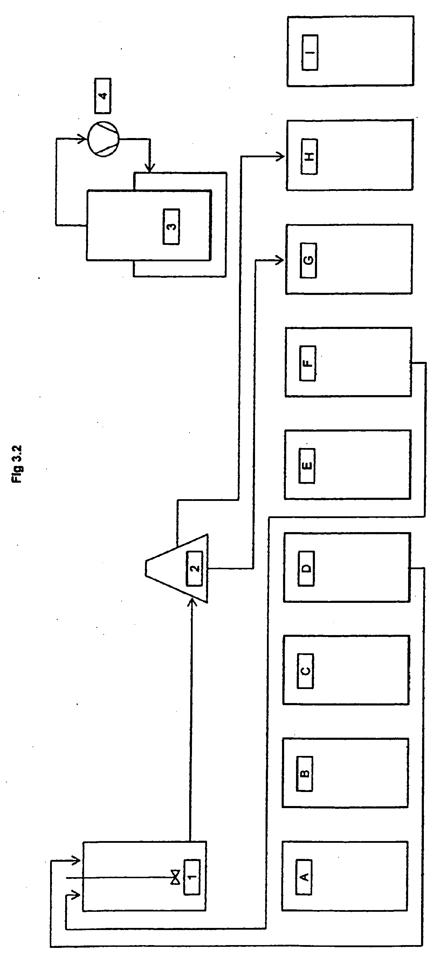

In einem zweiten Schritt gemäß Fig. 3.2 wird das Vorprodukt D nun im Rührwerksbehälter 1 mit der ionischen Flüssigkeit F gemischt. Während des Mischvorgangs belädt sich die ionische Flüssigkeit mit den polaren Molekülen, die im Schritt 3.1 nicht aus dem Vorprodukt D abgeschieden werden konnten. In der Zentrifuge 2 werden das so gereinigte Grundöl H und die beladene ionische Flüssigkeit G voneinander getrennt und in den Behältern G und H separat gelagert.

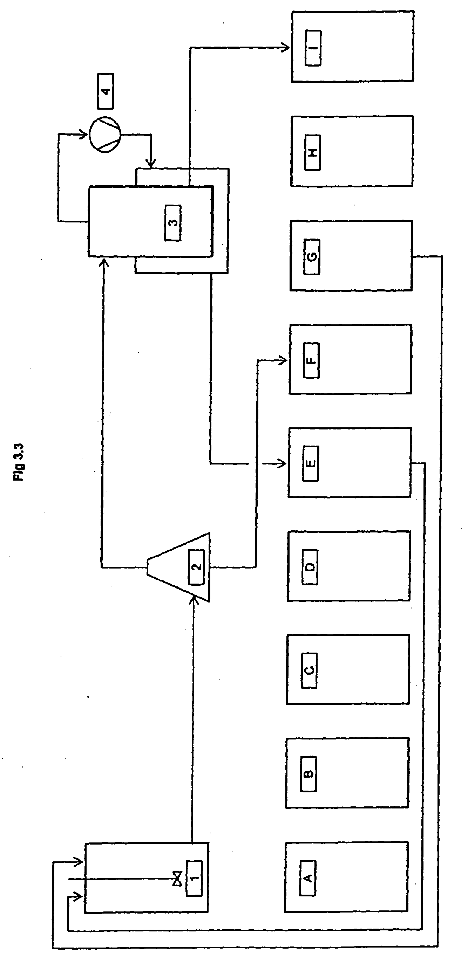

Im letzten Schritt nach Fig. 3.3 werden die beladene ionische Flüssigkeit G und das Extraktionsmittel E im Rührwerksbehälter 1 bei Umgebungsdruck und Umgebungstemperatur gemischt. Das Extraktionsmittel belädt sich dabei mit einem großen Teil der polaren Moleküle, die die ionische Flüssigkeit an das Extraktionsmittel abgibt. Dadurch wird zumindest ein Teil der Beladungskapazität der ionischen Flüssigkeit F frei für einen neuen Beladungszyklus. Die Zentrifuge 2 trennt die regenerierte ionische Flüssigkeit F von dem beladenen Extraktionsmittel E. Die ionische Flüssigkeit F fließt in den Behälter F zurück. Die Mischung aus Extraktionsmittel E und Störstoffen I wird im Verdampfer 3 durch Verdampfen des Extraktionsmittels getrennt, wonach regeneriertes Extraktionsmittel E und konzentrierte Störstoffe I in die jeweiligen Behälter E und I strömen.

Diese Arbeitsschritte werden zeitlich nacheinander durchlaufen, wobei die kostspieligen Anlagenteile Rührwerksbehälter 1, Zentrifuge 2 und Verdampfer 3 mit mech. Brüdenkompression 4 in jedem Arbeitsschritt benutzt werden können. Natürlich ist es auch möglich, nur den Extraktionsschritt 10 gern. Fig. 1 und 2 mittels Rührwerk, Zentrifuge und Verdampfer bei Umgebungsbedingungen und unter Verwendung eines geeigneten Extraktionsmittels durchzuführen und mit dem Adsorptionsschritt 11 gemäß Fig. 1 zu kombinieren.

Die besonderen Vorteile der vorbeschriebenen Verfahren bestehen darin, dass erstmalig die getrennte Aufbereitung auch von kleineren Ölchargen möglich ist, wobei die wesentlichen Grundölcharakteristika der jeweiligen Charge erhalten bleiben. In einem konkreten Ausführungsbeispiel sind naphthenbasisches Grundöl für Transformatoren behandelt worden, wobei das Trafoöl praktisch vollständig als Basisöl zurückgewonnen wurde. Wird hingegen nach dem Stand der Technik mit einer beispielsweise dreistufigen Destillationsanlage gearbeitet, so destilliert das Grundöl im Kopfprodukt und damit in der Gasölfraktion, womit es als Basisöl verloren ist.

Ebenfalls behandelt und recyclierend wieder gewonnen werden u. a. Turbinenöl, Hydrauliköl, Kompressoröl, Härteöl, spezielle Getriebeöle und Öle aus Fetten.

Das vorstehende Verfahren eignet sich auch für Kapazitäten von weniger als 10.000 t/a, so dass es in vielen kleinen Ländern und Inselstaaten anwendbar ist, wo insbesondere zur Vermeidung von langen Transportwegen kleine Aufbereitungsanlagen errichtet werden sollen.

Anwendbar ist das vorbeschriebene Verfahren letztlich auch bei Motoren- und Getriebeölen, aus denen sich synthetische Basisöle in hoher Reinheit zurückgewinnen lassen.

In einem konkreten Ausführungsbeispiel wird ein Altöl mit einem Aschegehalt von ca. 0,5%, einem Wassergehalt von ca. 2,5% und einem Schwefelgehalt von ca. 0,4% in einer Extraktionsstufe bei einer Temperatur zwischen 40°C und 100°C und einem Druck zwischen 40 bar und 100 bar behandelt. Das Extrakt hat nach der Behandlung einen Aschegehalt von weniger als 0,1 %, einen Wassergehalt von ca. 0,01 % und einen nahezu unveränderten Schwefelgehalt.

Nach einer der Extraktion folgenden Adsorptionsbehandlung im Multirohrreaktor, etwa bei Umgebungsbedingungen, verbleibt im Basisöl ein Restaschegehalt von weniger als 0,02%, ein Restwassergehalt von weniger als 0,005% und ein Schwefelgehalt von ca. 0,3%.

Nach der Extraktions-/Adsorptionsbehandlung kann das Öl als beispielsweise für die Schifffahrt geeigneter Brennstoff eingesetzt werden; das ursprüngliche Altöl ist dazu nicht geeignet.

## Patentansprüche

1. Verfahren zum Aufbereiten von Altölen und/oder Öl/Wassergemischen und/oder Lösemittel/Wassergemischen oder ähnlichen flüssigen Gemischen,
**dadurch gekennzeichnet, dass**
die Altöle oder flüssigen Gemische einem zweistufigen Prozess unterworfen werden, bei dem zunächst mittels Extraktion Verunreinigungen weitestgehend entfernt werden und die verbleibenden Verunreinigungen anschließend mittels Adsorption entfernt werden, wobei das Adsorptionsmittel regenerierbar ist.

2. Verfahren nach Anspruch 1, **dadurch gekennzeichnet, dass** die zweite Stufe ein- oder zwei- oder mehrfach durchlaufen wird.

3. Verfahren nach Anspruch 1 oder 2, **dadurch gekennzeichnet, dass** in der ersten Stufe Kohlenwasserstoffe als unpolare oder Kohlendioxid als polares Extraktionsmittel eingesetzt werden.

4. Verfahren nach einem der Ansprüche 1 bis 3, **dadurch gekennzeichnet, dass** in der zweiten Stufe polare Adsorptionsmittel eingesetzt werden und/oder dass das Adsorptionsmittel thermisch regeneriert wird.

5. Verfahren nach einem der Ansprüche 1 bis 4, **dadurch gekennzeichnet, dass** in der zweiten Stufe das Adsorptionsmittel in einem, bevorzugt aber in zwei oder mehreren Reaktionsbehältern verteilt ist und dass in alternierender Folge mindestens ein Reaktionsbehälter zur Entfernung der Verunreinigungen verwendet wird und in mindestens einem anderen Reaktionsbehälter das dortige Adsorptionsmittel regeneriert wird.

6. Verfahren nach einem der Ansprüche 1 bis 5, **dadurch gekennzeichnet, dass** als Extraktionsmittel in der ersten Stufe Propan oder Butan oder n-Petan oder unpolare C₂ bis C₁₀-Moleküle oder Mischungen aus diesen eingesetzt werden.

7. Verfahren nach einem der Ansprüche 1 bis 6, **dadurch gekennzeichnet, dass** die Extraktion bei Umgebungsdruck und Umgebungstemperatur stattfindet und das als Extraktor eine Zentrifuge oder ein Dekanter und als Gasabscheider ein mechanischer Brüdenverdichter verwendet werden.

8. Verfahren nach einem der Ansprüche 1 bis 7, **dadurch gekennzeichnet, dass** in der zweiten Stufe regenerierbare ionische Flüssigkeiten zur Entfernung der verbliebenen Verunreinigungen eingesetzt werden, wobei die ionischen Flüssigkeiten vorzugsweise mittels einer Extraktion regeneriert werden.

9. Verfahren nach einem der Ansprüche 1 bis 8, **dadurch gekennzeichnet, dass** das Extraktionsmittel nach der Extraktion mittels Ultraschallschwingungen und/oder durch Temperaturerhöhung und Druckabsenkung vom aufzubereitenden Stoff getrennt wird und/oder dass der Adsorption eine Entmetallisierung des Altöls vorgeschaltet wird.

10. Verwendung des Verfahrens nach einem der Ansprüche 1 bis 9 zur Aufbereitung von Lösemittel/Wassergemischen, alkoholischen Lösemittel/Wassergemischen und Lösemittel/Farbschlammgemischen, wobei vorzugsweise bei der Extraktion von alkoholischen Lösungsmitteln aus wässrigen Gemischen nicht odorierter Kohlenwasserstoff eingesetzt wird.
